# FASCICULE DE BREVET EUROPEEN

(11) **EP 0 921 895 B1**
(45) Date de publication et mention de la délivrance du brevet: **31.08.2005**
(21) Numéro de dépôt: 98933751.4
(22) Date de dépôt: 29.06.1998
(51) Int. Cl.: B23K 26/00

(54) **PROCEDE DE SOUDAGE DE TOLES REVETUES PAR UN FAISCEAU D'ENERGIE, TEL QU'UN FAISCEAU LASER**
VERFAHREN ZUM SCHWEISSEN VON BESCHICHTETEN BLECHEN MITTELS EINES ENERGIESTRAHLES WIE EINES LASERSTRAHLES
METHOD FOR WELDING COATED SHEETS WITH AN ENERGY BEAM, SUCH AS A LASER BEAM

(30) Priorité: 30.06.1997 FR 9708223
(43) Date de publication de la demande: 16.06.1999
(60) Demande divisionnaire: 05011079.0
(73) Titulaire: AUTOMOBILES PEUGEOT, 75116 Paris (FR); AUTOMOBILES CITROEN, 92200 Neuilly-sur-Seine (FR); Renault s.a.s., 92100 Boulogne Billancourt (FR)
(72) Inventeur: SANJEU, Catherine, F-91460 Marcoussis (FR); KIELWASSER, Mathieu, F-68870 Bartenheim (FR); FABBRO, Remy, F-91160 Antony (FR); CRIQUI, Bernard, F-92150 Suresnes (FR)
(74) Mandataire: Thinat, Michel
(86) Numéro de dépôt international: PCT/FR1998/001384
(87) Numéro de publication internationale: WO 1999/001249

(56) Documents cités:
- WO-A-91/02621
- PATENT ABSTRACTS OF JAPAN vol. 096, no. 008, 30 août 1996 & JP 08 090265 A (SUMITOMO METAL IND LTD), 9 avril 1996
- SCHOBBERT H ET AL: "NEUE VERFAHRENSVARIANTE DES LASERSTRAHLSCHWEISSENS" SCHWEISSEN UND SCHNEIDEN, vol. 46, no. 5, 1 mai 1994, pages 207-210, XP000443483

## Description

La présente invention concerne un procédé de soudage de tôles revêtues par un faisceau d'énergie, tel que par exemple un faisceau laser.

Elle s'applique en particulier au soudage de tôles galvanisées, bien qu'elle soit également applicable au soudage de tôles revêtues de tout autre matériau dont la température d'évaporation est inférieure à la température de fusion du matériau de base constituant les tôles ou de toute structure multicouche présentant cette caractéristique.

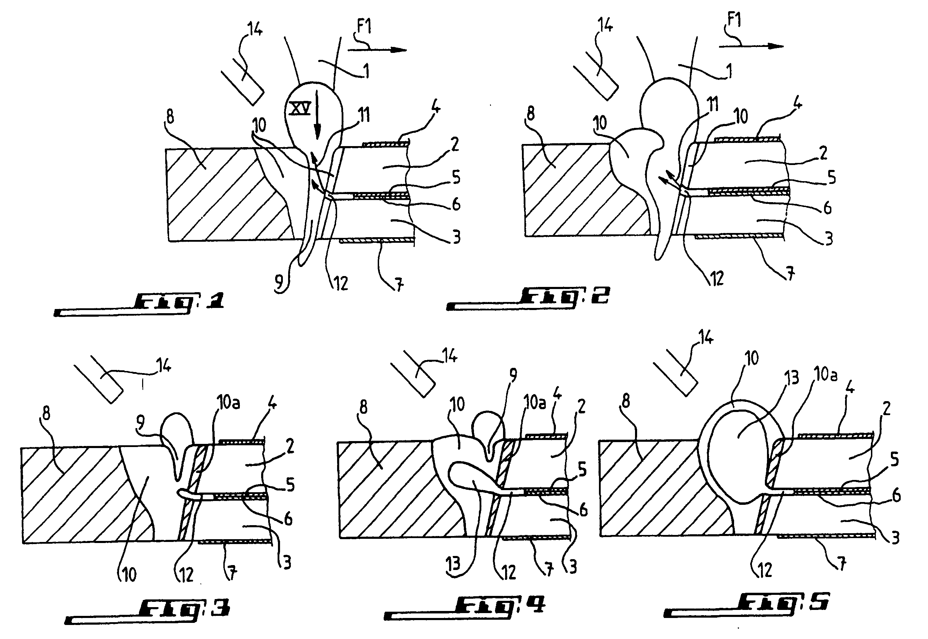

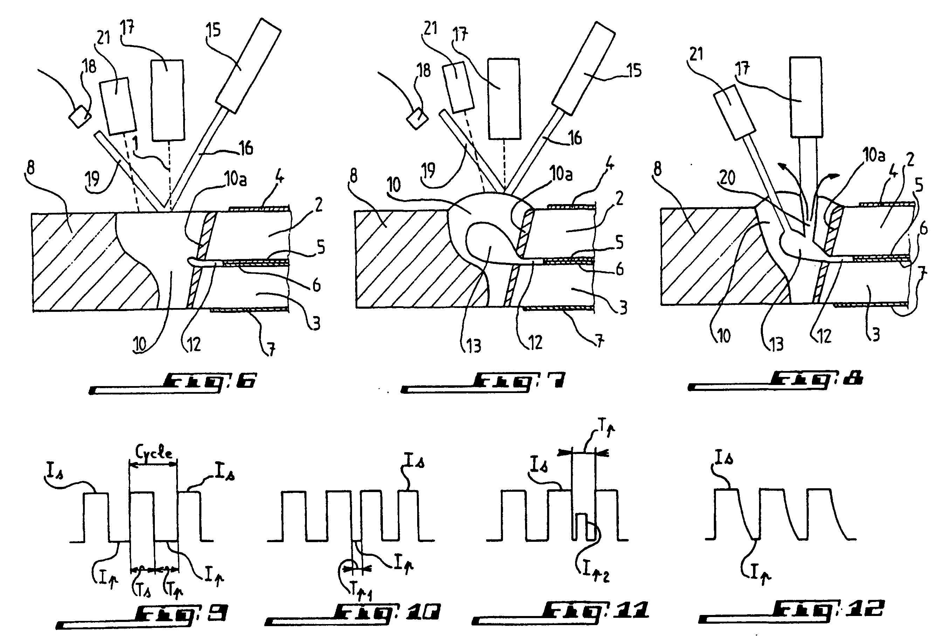

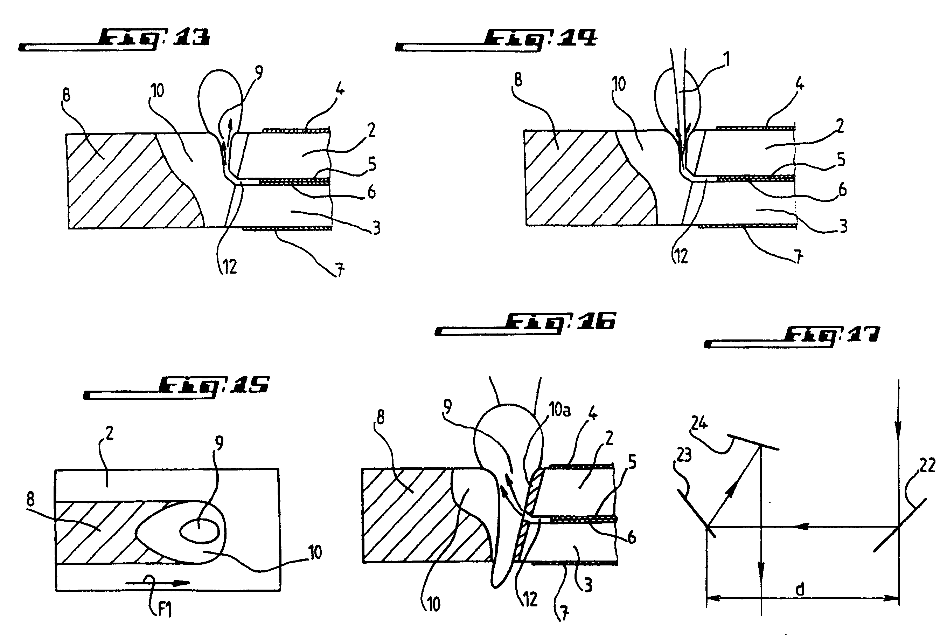

Les figures 1 et 2 représentent le soudage par un faisceau laser 1, qui fonctionne en mode pulsé, de deux tôles métalliques 2, 3 comportant respectivement sur leurs deux faces opposées deux revêtements de zinc 4, 5 ; 6, 7 et maintenues serrées l'une contre l'autre par tout moyen approprié au voisinage de l'emplacement de la soudure de façon que les deux revêtements internes 5, 6 soient compris entre les deux tôles 2, 3. Lors du déplacement du faisceau de soudage 1 dans le sens indiqué par la flèche F1, un cordon de soudure 8 est réalisé afin de lier les tôles 2, 3 l'une à l'autre et un passage 9, dénommé capillaire, est formé dans la zone de métal fondu 10. Lors du soudage des tôles revêtues 2, 3 au faisceau laser fonctionnant en mode continu, du fait que le point d'évaporation des revêtements 4-7 est inférieur au point de fusion du matériau de base constituant les deux tôles 2, 3, de la vapeur de zinc 11 emprisonnée entre ces deux tôles perce la paroi du bain liquide 10 comme représenté en figure 1 et pénètre dans le capillaire 9 pour frapper le front arrière de celui-ci comme représenté en figure 2, conduisant à un capillaire qui n'est plus stable et à une éjection du bain métallique fondu 10. Les inventeurs ont montré que le perçage de la paroi du bain liquide se fait en un ou plusieurs tunnels 12 comme indiqué sur les figures 1 et 2. Lors du soudage des tôles 2, 3 au faisceau laser fonctionnant en mode pulsé, la vapeur de zinc formée pendant chaque impulsion de soudage est évacuée par le capillaire sans provoquer d'instabilité du bain liquide comme représenté en figure 1. Pendant chaque impulsion de pause entre deux impulsions de soudage successives du faisceau d'énergie, le capillaire 9 se ferme comme représenté en figure 3.

On notera que pendant l'impulsion de pause, le niveau d'énergie du faisceau n'est pas nécessairement nul et qu'il peut encore contribuer au soudage. Cependant, par commodité, on utilisera les expressions "impulsion de soudage" et "impulsion de pause" dans la présente description pour désigner les niveaux haut et bas du faisceau en mode pulsé.

Si la pression de la vapeur de zinc est trop faible, cette vapeur reste confinée dans une zone autour du bain liquide 10 comme le montre la figure 3. Par contre, si cette pression de vapeur dépasse une pression critique, la vapeur de zinc pénètre dans le bain liquide 10 en formant une poche de gaz 13 qui atteint un équilibre sans éjection du bain liquide 10 (figure 4), ou soulève et éjecte complètement le bain liquide 10 (figure 5). La référence 14 désigne un dispositif d'amenée de gaz dirigé vers le bain liquide 10 et connu en soi.

On notera que pendant l'impulsion de pause, la partie 10a de la zone liquide 10 située du côté où les tôles ne sont pas encore soudées peut commencer à se solidifier : c'est pourquoi elle a été hachurée sur les figures 3 à 8.

De nombreuses solutions ont été proposées pour éliminer les inconvénients dus au dégagement incontrôlé des vapeurs de zinc conduisant à une soudure de mauvaise qualité.

L'une des ces solutions connues consiste à réaliser, avant soudage, un jeu entre les tôles à souder pour permettre l'évacuation des vapeurs de zinc. Cependant, cette solution connue a pour inconvénients de prévoir une opération supplémentaire de réalisation de bossages, par exemple par emboutissage, sur les tôles pour la formation du jeu et de nécessiter un appareillage adapté pour cette opération.

Une autre solution connue consiste à supprimer le revêtement de zinc à l'endroit de la soudure et le remplacer par un revêtement différent, tel que par exemple un alliage de nickel. Cette solution a pour inconvénient d'occasionner un surcoût et d'être complexe du fait que l'on dépose un revêtement différent à certains endroits des tôles.

Selon encore une autre solution connue, les tôles à souder sont disposées verticalement et le faisceau d'énergie de soudage se déplace de bas en haut de sorte que le matériau fondu s'écoule par gravité, ce qui a pour effet d'améliorer l'évacuation de la vapeur de zinc. Cette solution nécessite un montage particulier pour que les tôles soient disposées verticalement et, éventuellement, dans le cas de pièces complexes et/ou de grandes dimensions telles que des portes de véhicules automobiles, de modifier l'orientation de la pièce pour que le faisceau d'énergie de soudage se déplace toujours de bas en haut.

La présente invention a pour but d'éliminer les inconvénients ci-dessus des solutions connues en mettant en oeuvre un procédé de soudage de tôles revêtues à l'aide d'un faisceau d'énergie qui permet d'obtenir une bonne qualité de soudure sans adaptation de la géométrie des pièces et sans utiliser d'appareillage complémentaire plus ou moins compliqué pour maintenir les tôles à souder.

A cet effet, l'invention propose un procédé de soudage par un faisceau d'énergie de tôles revêtues d'un matériau ayant une température d'évaporation inférieure à la température de fusion du matériau des tôles selon la revendication 1 ou 2.

De préférence, le faisceau d'énergie permettant de favoriser l'évacuation de la vapeur du matériau du revêtement est le faisceau d'énergie de soudage.

Selon un mode de réalisation le procédé consiste à détecter ou prévoir une modification de la surface de la matière fondue et à commander le faisceau d'énergie de sorte que les impulsions émises par celui-ci puissent réaliser un perçage dans la matière fondue lorsqu'un soulèvement déterminé de la surface de cette matière a été détecté ou a été prévu afin d'évacuer la vapeur du matériau de revêtement présente dans une poche de la matière fondue.

L'opération de perçage de la surface de la matière fondue s'effectue en diminuant la largeur de chaque impulsion de pause entre deux impulsions consécutives de soudage du faisceau d'énergie ou en introduisant une impulsion supplémentaire pendant la durée de chaque impulsion de pause entre deux impulsions consécutives de soudage du faisceau d'énergie.

De préférence, la détection de la modification de la surface de la matière fondue s'effectue par une source d'émission d'un faisceau incident dirigé vers la matière fondue de soudage et un détecteur apte à mesurer les variations, directionnelles, d'intensité ou de forme, du faisceau réfléchi par la surface de la matière fondue, ce faisceau incident étant avantageusement un faisceau laser et le détecteur étant avantageusement une photodiode.

La prévision de modification de la surface de la matière fondue s'effectue en mesurant la quantité de vapeur évacuée du matériau du revêtement lors du soudage et en la comparant à une quantité de vapeur à évacuer prédéterminée de ce matériau, la mesure de la quantité de vapeur évacuée s'effectuant, de préférence, par une méthode spectroscopique.

Selon une variante de réalisation le procédé consiste à commander le faisceau d'énergie de sorte que les impulsions émises par celui-ci soient adaptées pour effectuer le perçage de toute poche de vapeur du matériau du revêtement présente dans la matière fondue de soudage pendant chaque impulsion de pause entre deux impulsions de soudage consécutives du faisceau d'énergie afin d'évacuer la vapeur du matériau du revêtement.

Selon encore une autre variante de réalisation, le procédé consiste à commander le faisceau d'énergie de sorte que les impulsions émises par celui-ci soient adaptées pour mettre en communication permanente, pendant chaque impulsion de pause entre deux impulsions consécutives de soudage du faisceau d'énergie, le capillaire et au moins un tunnel formé par la pression de vapeur du matériau de revêtement dans la zone fondue d'interface de deux tôles à souder afin d'obtenir une évacuation de la vapeur de ce matériau pendant chaque impulsion de pause.

Selon l'une ou l'autre des deux variantes de réalisation ci-dessus mentionnées, le procédé consiste à diminuer la largeur de chaque impulsion de pause du faisceau d'énergie ou à introduire une impulsion supplémentaire pendant la durée de chaque impulsion de pause du faisceau d'énergie pour percer la poche de vapeur précitée ou maintenir la communication entre le capillaire et le tunnel précités.

Chaque faisceau d'énergie précité est de préférence un faisceau laser.

L'invention sera mieux comprise et d'autres buts, caractéristiques, détails et avantages de celle-ci apparaitront plus clairement au cours de la description explicative qui va suivre faite en référence aux dessins schématiques annexés donnés uniquement à titre d'exemple illustrant plusieurs modes de réalisation de l'invention et dans lesquels :
- la figure 1 représente un procédé de soudage de tôles revêtues par un faisceau laser avec formation de vapeur provenant de l'évaporation du matériau des revêtements des tôles ;
- la figure 2 représente l'effet d'éjection du matériau fondu lors du soudage par la vapeur du matériau des revêtements des tôles ;
- la figure 3 représente l'état de la soudure pendant une impulsion de pause entre deux impulsions de soudage consécutives du faisceau d'énergie avec la vapeur de zinc confinée dans une zone autour du bain fondu ;
- la figure 4 représente la formation d'une poche de vapeur de zinc formée dans le bain fondu pendant une impulsion de pause du faisceau d'énergie sans provoquer d'éjection de ce bain ;
- la figure 5 représente la formation d'une poche de vapeur de zinc dans le bain fondu telle qu'elle éjecte complètement ce bain ;
- les figures 6 à 8 représentent un mode de réalisation de l'invention permettant de détecter un soulèvement du bain fondu et de percer le bain fondu pour évacuer la vapeur de zinc présente dans la poche de ce bain ;
- la figure 9 représente un train normal d'impulsions de soudage du faisceau d'énergie de soudage fonctionnant en mode pulsé pour souder deux tôles ;
- les figures 10 à 12 représentent chacune un train d'impulsions modifié du faisceau d'énergie de soudage en mode pulsé permettant de percer la poche de vapeur de zinc dans le bain fondu ;
- les figures 13 et 14 représentent une variante de réalisation de l'invention selon laquelle le faisceau d'énergie de soudage permet de maintenir une communication entre le capillaire et un tunnel formé dans l'interface des deux tôles à souder pendant chaque impulsion de pause de ce faisceau pour favoriser l'évacuation de la vapeur de zinc ;
- la figure 15 est une vue de dessus suivant la flèche XV de la figure 1 et représentant un mode de réalisation non couvert par les revendications permettant de modifier la forme en section transversale du capillaire pour favoriser l'évacuation de la vapeur de zinc ;
- la figure 16 est une vue en coupe semblable aux figures 1 à 8, mais dans le mode de réalisation de la figure 15 ; et
- la figure 17 représente un système optique permettant d'obtenir un faisceau de section elliptique.

Le procédé de l'invention permettant de souder des tôles revêtues à l'aide d'un faisceau d'énergie tel qu'un faisceau laser ou un faisceau d'électrons, en évitant les éjections du bain métallique, est décrit en référence à deux modes de réalisation différents, l'un utilisant un faisceau d'énergie de soudage fonctionnant en mode pulsé et l'autre utilisant un tel faisceau fonctionnant aussi bien en mode pulsé qu'en mode continu, qui n'est pas couvert par les revendications mais est utile à la compréhension de l'invention

Le premier mode de réalisation du procédé de l'invention, où le faisceau d'énergie fonctionne uniquement en mode pulsé, va être décrit en référence aux figures 6 à 8, dont les parties communes à celles déjà décrites dans le procédé de soudage des figures 1 à 5, portent les mêmes références.

Selon ce mode de réalisation, on détecte le soulèvement du bain liquide 10 lors de la formation de la poche de vapeur de zinc 13 dans ce bain pendant le temps de pause des impulsions du faisceau d'énergie incident en utilisant une source 15 émettant un faisceau incident 16, tel qu'un faisceau laser HeNe, en direction du bain liquide 10. Bien entendu, la source 15 est différente de la source 17 servant au soudage et on prévoit également un détecteur 18, tel que par exemple une photodiode, permettant de mesurer les variations, directionnelles, d'intensité ou de forme, du faisceau 19 réfléchi par la surface du bain liquide 10. Les signaux électriques fournis par le détecteur 18 et représentatifs de telles variations, sont appliqués à un circuit de traitement (non représenté) apte à commander la source 17 ou une source annexe d'un faisceau d'énergie de façon que les impulsions émises par celle-ci permettent de percer la poche de vapeur de zinc 13 au travers du bain liquide 10 et d'évacuer à l'extérieur la vapeur de zinc lorsque la surface du bain liquide 10 s'est soulevée à une hauteur déterminée. Plus précisément, lorsque la surface du bain liquide 10 est soulevée par la poche 13 comme représenté en figure 7, le faisceau réfléchi 19 peut être dévié par la forme bombée de la surface du bain 10 de façon à ne plus frapper le détecteur 18 ou à le frapper sous un angle différent. Dans ces conditions, le détecteur 18 ne fournit plus de signal électrique ou fournit un signal modifié de sorte que le circuit de traitement commande la source 17 ou la source annexe pour que le faisceau d'énergie réalise, pendant la durée Tp de chaque impulsion de pause Ip du train d'impulsions représenté en figure 9 entre deux impulsions de soudage successives Is, un perçage 20 dans la couche supérieure du bain liquide 10 et débouchant dans la poche 13 (figure 8). Un tel perçage peut s'effectuer pendant chaque impulsion de pause en diminuant la largeur de la durée de l'impulsion de pause Ip comme indiqué en Tp1 en figure 10 ou en introduisant pendant la durée Tp de l'impulsion de pause de niveau bas Ip une impulsion supplémentaire Ip2 comme représenté en figure 11 et d'une largeur et d'un niveau d'intensité définis de façon à ne percer que la partie en forme de bulle du bain liquide 10 pour atteindre la poche 13. Bien entendu, la détection de la montée du bain liquide 10 sous l'effet de la poche de vapeur de zinc 13 peut s'effectuer par tout autre dispositif optique et de traitement d'image, par exemple par une caméra vidéo, par interférométrie, etc ..., ces dispositifs étant de préférence intégrés dans la tête optique de focalisation du faisceau de soudage. On a représenté sur les figures 6 à 8 la source annexe de faisceau laser 21 utilisée pour favoriser l'évacuation de vapeur de zinc et de préférence située à l'arrière du capillaire 9 car on a constaté que les vapeurs s'évacuent plus facilement à l'arrière de ce capillaire.

Selon une variante du premier mode de réalisation de l'invention, le perçage de la poche de vapeur de zinc 13 au travers du bain liquide 10 s'effectue par détection à l'aide de moyens appropriés de la disparition des vaguelettes à la surface du bain liquide. En effet, un éventuel gonflement du bain liquide lisse les irrégularités en surface de celui-ci dues aux agitations hydrodynamiques. Les vaguelettes disparaissent ou s'amenuisent sous l'action des forces de tension de surface et la détection de toute modification de la surface du bain 10 pourra révéler une formation de poche de vapeur de zinc 13. Une telle information pourra être détectée et traitée comme décrit dans la variante de réalisation précédente en adaptant le train d'impulsions du faisceau énergétique, de préférence le faisceau de soudage, comme représenté à la figure 10 ou à la figure 11.

Selon une autre variante de ce mode de réalisation, le perçage de la poche de vapeur de zinc 13 peut s'effectuer en prévoyant le soulèvement du bain liquide 10 par mesure de la quantité de vapeur de zinc évacuée préalablement. En effet, comme déjà expliqué précédemment, l'opération de soudage se traduit par l'évaporation, à l'interface des tôles à souder 2, 3, d'une certaine quantité du revêtement de zinc. Si la quantité de vapeur de zinc évacuée pendant chaque impulsion de pause du faisceau d'énergie est inférieure à la quantité prédéterminée à évacuer, une éjection du bain liquide 10 est prévisible. Dans ces conditions, le résultat d'une telle comparaison est exploité de façon à diminuer la durée de chaque impulsion de pause comme représenté en figure 10 ou à introduire une impulsion supplémentaire dans l'impulsion de pause comme représenté en figure 11 pour réaliser pendant chaque impulsion de pause le perçage 20 d'évacuation de la vapeur de zinc présente dans la poche 13. La quantité de zinc évacuée lors du soudage peut être mesurée par une méthode spectroscopique après étalonnage par une analyse en régime de condition stable.

Selon toujours une autre variante du premier mode de réalisation de l'invention, le perçage 20 de la poche de vapeur de zinc 13, au lieu d'être réalisé après détection en temps réel du soulèvement du bain 10 comme expliqué en référence aux figures 6 à 8, peut être réalisé en permanence, d'une manière systématique, dans chaque cycle de soudage Ts + Tp du train d'impulsions émis par la source d'énergie de soudage 17 ou la source annexe. Ainsi, durant la durée Tp de l'impulsion de pause Ip de ce train d'impulsions, au moins une impulsion de forme adaptée Ip2 peut être introduite comme représenté en figure 11 pour réaliser le perçage 20.

Selon une dernière variante de ce mode de réalisation de l'invention, l'évacuation de la vapeur de zinc peut également s'effectuer en maintenant une communication entre le capillaire 9 du bain liquide 10 et le tunnel 12 formé comme expliqué précédemment en référence aux figures 1 et 2. A cet effet, la forme du train d'impulsions émis par le faisceau énergétique de soudage ou le faisceau énergétique externe sera choisie de façon à être conforme à celle du train d'impulsions de la figure 11 ou à celle du train d'impulsions de la figure 12 qui sont des formes de trains d'impulsions données à titre d'exemple. Ainsi, pendant chaque cycle de soudage, l'impulsion de pause Ip est adaptée pour réaliser la liaison ou communication permanente entre le tunnel 12 et le capillaire 9 comme représenté en figure 13. La figure 14 montre le faisceau d'énergie à émission par impulsions 1 délivré par la source de soudage ou par la source externe et dont les impulsions sont générées conformément au train d'impulsions de la figure 11 ou de la figure 12 pour former la communication permanente entre le tunnel 12 et le capillaire 9.

Conformément au second mode de réalisation, qui n'est pas couvert par les revendications, le faisceau d'énergie permettant de souder les tôles revêtues 2, 3 aussi bien en mode de fonctionnement pulsé qu'en mode de fonctionnement continu en améliorant l'échappement de la vapeur de zinc à travers le capillaire 9 et évitant ainsi les éjections du bain liquide 10, est adapté pour réaliser le capillaire 9 de sorte qu'il présente en section transversale une forme allongée notamment sensiblement elliptique comme représenté en figure 15, le grand axe de cette forme elliptique étant dirigé dans la direction de déplacement du faisceau d'énergie de soudage symbolisé par la flèche F1. Le faisceau d'énergie permettant de réaliser le capillaire elliptique 10 peut être fourni par la source de soudage ou une source externe et est de préférence un faisceau laser. La répartition énergétique de cette section elliptique du capillaire 10 est déterminée pour permettre un processus de soudage tout en allongeant le capillaire afin de ne pas perturber la sortie de la vapeur du revêtement, de diminuer l'influence de la vapeur métallique lors de son évacuation sur la stabilité du procédé de soudage et ainsi d'augmenter le débit grâce à une section plus importante du capillaire 9. On a constaté que l'on obtenait un capillaire stable avec un faisceau de section allongée, ce qui n'est pas toujours le cas avec un faisceau de section circulaire.

On voit sur la figure 16 que, grâce à cette augmentation de section, les vapeurs de zinc s'échappent plus facilement et/ou frappent le front arrière du capillaire sans le déformer et/ou sans risquer des éjections de liquide comme dans le cas, par exemple, de la figure 2.

La forme allongée notamment elliptique du capillaire 9 peut être réalisée par différentes techniques. L'une de ces techniques consiste à utiliser un faisceau d'énergie à section circulaire mais incliné relativement à la face supérieure de la tôle 2 de manière que la section horizontale de ce faisceau soit elliptique. Une autre technique consiste à prévoir une ou plusieurs lentilles cylindriques ou asphériques, un ou plusieurs miroirs cylindriques ou asphériques, ou des éléments diffractifs ou tout autre dispositif analogue disposé sur le trajet du faisceau d'énergie de manière à générer la forme elliptique du capillaire 9 pendant l'opération de soudage.

La figure 17 représente un système optique permettant de réaliser un faisceau elliptique. Ce système comprend deux miroirs cylindriques 22 et 23 formant de manière connue un télescope de façon que le faisceau qu'ils forment ait un rapport longueur sur largeur défini et un miroir parabolique classique 24 qui focalise ce faisceau en un point. La distance d entre les deux miroirs 22 et 23 est ajustable et permet ainsi d'avoir une focalisation suivant le grand axe et le petit axe de l'éllipse au même endroit. En d'autres termes, l'astigmatisme peut être réglé, si besoin, à zéro.

L'intérêt de ce système optique est de posséder un système de focalisation et un système générant le rapport ci-dessus indépendants l'un de l'autre. On pourra changer le rapport ou changer la focalisation en gardant un rapport identique. Il est à noter que les angles d'incidence du faisceau sur les miroirs sont optimisés de sorte que le système optique se règle facilement et minimise les aberrations optiques.

Encore une autre technique consiste à utiliser un faisceau d'énergie oscillant dans la direction de déplacement du soudage de manière à produire la forme elliptique du capillaire 9. Enfin, deux ou plusieurs faisceaux d'énergie, ayant des positions et des angles d'attaque appropriés, peuvent être utilisés pour créer le capillaire elliptique 9.

Ainsi, une optimisation de la forme elliptique du capillaire 9 permet une évacuation de la vapeur de zinc sans perturber le bain métallique 10 et d'augmenter le débit d'échappement de la vapeur du matériau du revêtement.

On signalera enfin que la répartition d'intensité dans la section du faisceau de soudage sera telle qu'elle permette le soudage tout en l'optimisant afin d'économiser de l'énergie : on a constaté que les meilleurs résultats sont obtenus avec l'intensité du faisceau plus forte à l'avant de celui-ci par rapport à sa direction de déplacement.

## Revendications

1. Procédé de soudage par un faisceau d'énergie de tôles (2,3) revêtues d'un matériau (4-7) ayant une température d'évaporation inférieure à la température de fusion du matériau des tôles (2,3) de sorte que le matériau du revêtement (4-7) s'évapore pendant le soudage en créant de la vapeur présente dans le capillaire (9) formé par la matière fondue de soudage, **caractérisé en ce qu'**il consiste à prévoir un faisceau d'énergie (1) fonctionnant en mode pulsé dirigé sur la zone de soudage et à commander uniquement le faisceau d'énergie (1) de manière que les impulsions du faisceau (1) soient adaptées pour réaliser un perçage (20) dans la matière fondue (10) afin d'évacuer la vapeur du matériau de revêtement présente dans une poche (13) de la matière fondue (10).

2. Procédé de soudage par un faisceau d'énergie de tôles (2,3) revêtues d'un matériau (4-7) ayant une température d'évaporation inférieure à la température de fusion du matériau des tôles (2,3) de sorte que le matériau du revêtement (4-7) s'évapore pendant le soudage en créant de la vapeur présente dans le capillaire (9) formé par la matière fondue de soudage, **caractérisé en ce qu'**il consiste à prévoir un faisceau d'énergie (1) fonctionnant en mode pulsé dirigé sur la zone de soudage et à commander uniquement le faisceau d'énergie (1) de manière que les impulsions du faisceau (1) soient adaptées pour mettre en communication permanente le capillaire (9) et au moins un tunnel (12) formé par la pression de vapeur du matériau de revêtement dans la zone fondue d'interface des deux tôles à souder (2,3) afin d'évacuer la vapeur de ce matériau.

3. Procédé selon la revendication 1 ou 2, **caractérisé en ce que** le faisceau d'énergie permettant l'évacuation de la vapeur du matériau du revêtement (4-7) est le faisceau d'énergie de soudage (1).

4. Procédé selon la revendication 1, **caractérisé en ce qu'**il consiste à détecter ou prévoir une modification de la surface de la matière fondue (10) et à commander le faisceau d'énergie (1) de sorte que les impulsions émises par celui-ci puissent réaliser le perçage (20) dans la matière fondue (10) lorsqu'un soulèvement déterminé de la surface de cette matière a été détecté ou a été prévu afin d'évacuer la vapeur du matériau de revêtement présente dans la poche (13) de la matière fondue (10).

5. Procédé selon la revendication 4, **caractérisé en ce qu'**il consiste à percer la surface de la matière fondue (10) en diminuant la largeur (Tp) de chaque impulsion de pause (Ip) entre deux impulsions consécutives de soudage (Ts) du faisceau d'énergie (1) ou en introduisant une impulsion supplémentaire (Ip2) pendant la durée de chaque impulsion de pause (Ip) entre deux impulsions consécutives de soudage (Is) du faisceau d'énergie (1).

6. Procédé selon la revendication 4 ou 5, **caractérisé en ce qu'**il consiste à détecter la modification de la surface de la matière fondue (10) par une source (15) d'émission d'un faisceau incident (16) dirigé vers la matière fondue de soudage (10) et un détecteur (18) apte à mesurer les variations, directionnelles, d'intensité ou de forme, du faisceau (19) réfléchi par la surface de la matière fondue (10).

7. Procédé selon la revendication 6, **caractérisé en ce que** le faisceau incident (16) de la source (15) précitée est un faisceau laser et le détecteur (18) précité est une photodiode.

8. Procédé selon la revendication 4 ou 5, **caractérisé en ce qu'**il consiste à prévoir la modification de la surface de la matière fondue (10) en mesurant la quantité de vapeur évacuée du matériau du revêtement lors du soudage et en la comparant à une quantité de vapeur évacuée prédéterminée de ce matériau.

9. Procédé selon la revendication 8, **caractérisé en ce qu'**il consiste à mesurer la quantité de vapeur évacuée par une méthode spectroscopique.

10. Procédé selon la revendication 1, **caractérisé en ce qu'**il consiste à commander le faisceau d'énergie (1) de sorte que les impulsions émises par celui-ci soient adaptées pour effectuer le perçage (20) de la poche (13) de vapeur du matériau du revêtement présente dans la matière fondue de soudage (10) pendant chaque impulsion de pause (Ip) entre deux impulsions de soudage consécutives (Is) du faisceau d'énergie afin d'évacuer la vapeur du matériau du revêtement.

11. Procédé selon la revendication 2, **caractérisé en ce qu'**il consiste à commander le faisceau d'énergie (1) de sorte que les impulsions émises par celui-ci soient adaptées pour mettre en communication permanente, pendant chaque impulsion de pause (Ip) entre deux impulsions consécutives de soudage (Is), le capillaire (9) et le tunnel (12) précité formé par la pression de vapeur du matériau du revêtement dans la zone fondue d'interface des deux tôles à souder (2, 3) afin d'obtenir une évacuation de la vapeur de ce matériau pendant chaque impulsion de pause (Ip).

12. Procédé selon la revendication 10 ou 11, **caractérisé en ce qu'**il consiste à diminuer la largeur de chaque impulsion de pause (Ip) du faisceau d'énergie (1) ou à introduire une impulsion supplémentaire (Ip2) pendant la durée de chaque impulsion de pause (Ip) pour percer la poche de vapeur précitée (13) ou maintenir la communication entre le capillaire (9) et le tunnel (12) précités.

## Patentansprüche

1. Verfahren zum Verschweißen von Blechen (2, 3) mittels eines Energiestrahls, die mit einem Material (4 - 7) beschichtet sind, dessen Verdampfungstemperatur unter der Schmelztemperatur des Materials der Bleche (2, 3) liegt, so dass das Material der Beschichtung (4 - 7) während des Verschweißens verdampft, indem es Dampf erzeugt, der in der Kapillare (9) vorhanden ist, die durch das aufgeschmolzene Schweißmaterial gebildet wird, **dadurch gekennzeichnet, dass** es darin besteht, einen gepulst betriebenen Energiestrahl (1) vorzusehen, der auf den zu schweißenden Bereich gerichtet ist, und den Energiestrahl (1) nur so zu steuern, dass die Impulse des Strahls (1) darauf abgestimmt sind, in der Schmelze (10) eine Bohrung (20) zu erzeugen, um den Dampf des Beschichtungsmaterials abzuführen, der in einer Blase (13) der Schmelze (10) vorhanden ist.

2. Verfahren zum Verschweißen von Blechen (2, 3) mittels eines Energiestrahls, die mit einem Material (4 - 7) beschichtet sind, dessen Verdampfungstemperatur unter der Schmelztemperatur des Materials der Bleche (2, 3) liegt, so dass das Material der Beschichtung (4 - 7) während des Verschweißens verdampft, indem es Dampf erzeugt, der in der Kapillare (9) vorhanden ist, die durch das aufgeschmolzene Schweißmaterial gebildet wird, **dadurch gekennzeichnet, dass** es darin besteht, einen gepulst betriebenen Energiestrahl (1) vorzusehen, der auf den zu schweißenden Bereich gerichtet ist, und den Energiestrahl (1) nur so zu steuern, dass die Impulse des Strahls (1) darauf abgestimmt sind, die Kapillare (9) und zumindest einen Kanal (12) in ständige Verbindung zu setzen, der durch den Dampfdruck des Beschichtungsmaterials in dem aufgeschmolzenen Schnittstellenbereich der beiden zu verschweißenden Bleche (2, 3) gebildet wird, um den Dampf dieses Materials abzuführen.

3. Verfahren nach Anspruch 1 oder 2, **dadurch gekennzeichnet, dass** der Energiestrahl, welche das Abführen von Dampf des Beschichtungsmaterials (4 - 7) ermöglicht, der Schweißenergiestrahl (1) ist.

4. Verfahren nach Anspruch 1, **dadurch gekennzeichnet, dass** es darin besteht, eine Oberflächenänderung der Schmelze (10) zu erfassen bzw. vorzusehen und den Energiestrahl (1) so zu steuern, dass die von diesem abgegebenen Impulse die Bohrung (20) in die Schmelze (10) erzeugen können, wenn ein bestimmtes Abheben der Oberfläche dieser Schmelze erfasst oder vorgesehen wurde, um den in der Blase (13) der Schmelze (10) vorliegenden Dampf des Beschichtungsmaterials abzuführen.

5. Verfahren nach Anspruch 4, **dadurch gekennzeichnet, dass** es darin besteht, die Oberfläche der Schmelze (10) zu durchbohren, indem die Breite (Tp) eines jedes Pausenimpulses (Ip) zwischen zwei aufeinanderfolgenden Schweißimpulsen (Ts) des Energiestrahls (1) vermindert wird bzw. indem während der Dauer eines jeden Pausenimpulses (Ip) zwischen zwei aufeinanderfolgenden Schweißimpulsen (Is) des Energiestrahls (1) ein zusätzlicher Impuls (Ip2) eingeführt wird.

6. Verfahren nach Anspruch 4 oder 5, **dadurch gekennzeichnet, dass** es darin besteht, die Oberflächenänderung der Schmelze (10) über eine Quelle (15) zum Abgeben eines Einfallsstrahls (16) zu erfassen, der auf das aufgeschmolzene Schweißmaterial (10) gerichtet ist, sowie über einen Sensor (18), der Änderungen in der Richtung. Stärke oder Form des von der Oberfläche der Schmelze (10) reflektierten Strahls (19) messen kann.

7. Verfahren nach Anspruch 6, **dadurch gekennzeichnet, dass** der Einfallsstrahl (16) der vorgenannten Quelle (15) ein Laserstrahl ist und der vorgenannte Sensor (18) eine Photodiode ist.

8. Verfahren nach Anspruch 4 oder 5, **dadurch gekennzeichnet, dass** es darin besteht, die Oberflächenänderung der Schmelze (10) **dadurch** vorzusehen, dass die beim Schweißen vom Beschichtungsmaterial abgegebene Dampfmenge gemessen wird und mit einer vorbestimmten abgegebenen Dampfmenge dieses Materials verglichen wird.

9. Verfahren nach Anspruch 8, **dadurch gekennzeichnet, dass** es darin besteht, die abgegebene Dampfmenge spektroskopisch zu messen.

10. Verfahren nach Anspruch 1, **dadurch gekennzeichnet, dass** es darin besteht, den Energiestrahl (1) so zu steuern, dass die von diesem abgegebenen Impulse darauf abgestimmt sind, die Bohrung (20) in die Dampfblase (13) des im aufgeschmolzenen Schweißmaterial (10) vorliegenden Dampfs des Beschichtungsmaterials während jedes Pausenimpulses (Ip) zwischen zwei aufeinanderfolgenden Schweißimpulsen (Is) des Energiestrahls auszuführen, um den Dampf des Beschichtungsmaterials abzuführen.

11. Verfahren nach Anspruch 2, **dadurch gekennzeichnet, dass** es darin besteht, den Energiestrahl (1) so zu steuern, dass die von diesem abgegebenen Impulse darauf abgestimmt sind, bei jedem Pausenimpuls (Ip) zwischen zwei aufeinanderfolgenden Schweißimpulsen (Is) die Kapillare (9) und den vorgenannten Kanal (12) in ständige Verbindung zu setzen, der durch den Dampfdruck des Beschichtungsmaterials in dem aufgeschmolzenen Schnittstellenbereich der beiden zu verschweißenden Bleche (2, 3) gebildet wird, um ein Abführen des Dampfs dieses Materials bei jedem Pausenimpuls (Ip) zu erreichen.

12. Verfahren nach Anspruch 10 oder 11, **dadurch gekennzeichnet, dass** es darin besteht, die Breite eines jeden Pausenimpulses (Ip) des Energiestrahls (1) zu vermindern bzw. während der Dauer eines jeden Pausenimpulses (Ip) einen zusätzlichen Impuls (Ip2) einzuführen, die vorgenannte Dampfblase (13) zu durchbohren bzw. die Verbindung zwischen der Kapillare (9) und dem Kanal (12) aufrechtzuhalten.

## Claims

1. Method for welding sheets (2, 3) coated with a material (4 - 7) which has an evaporation temperature lower than the melting temperature of the material for the sheets (2, 3) with an energy beam so that the coating material (4 - 7) evaporates during welding, creating vapour present in the capillary (9) formed by the melted welding material, **characterised in that** it consists of providing an energy beam (1) operating in a pulsed way directed over the welding area and controlling only the energy beam (1) so that the pulses of the beam (1) are adjusted to make a hole (20) in the melted material (10) in order to remove the vapour from the coating material present in a pocket (13) of the melted material (10).

2. Method for welding sheets (2, 3) coated with a material (4 - 7) which has an evaporation temperature lower than the melting temperature of the material for the sheets (2, 3) with an energy beam so that the coating material (4 - 7) evaporates during welding, creating vapour present in the capillary (9) formed by the melted welding material, **characterised in that** it consists of providing an energy beam (1) operating in a pulsed way directed over the welding area and controlling only the energy beam (1) so that the pulses of the beam (1) are adjusted to make the capillary (9) communicate permanently with at least one tunnel (12) formed by the pressure of the vapour from the coating material in the melted area of the interface between the two sheets to be welded (2, 3) in order to remove the vapour from this material.

3. Method according to claim 1 or 2, **characterised in that** the energy beam allowing removal of the vapour from the coating material (4 - 7) is the welding energy beam (1).

4. Method according to claim 1. **characterised in that** it consists of detecting or providing a modification to the surface of the melted material (10) and controlling the energy beam (1) so that the pulses emitted by it may make the hole (20) in the melted material (10) when a certain lifting in the surface of this material has been detected or has been provided in order to remove the vapour from the coating material present in the pocket (13) of the melted material (10).

5. Method according to claim 4, **characterised in that** it consists of piercing the surface of the melted material (10) by reducing the width (Tp) of each pulse (Ip) between two consecutive welding pulses (Ts) of the energy beam (1) or introducing an additional pulse (Tp2) during each pause pulse (Ip) between two consecutive welding pulses (Is) of the energy beam (1).

6. Method according to claim 4 or 5, **characterised in that** it consists of detecting the modification to the surface of the melted material (10) by a source (15) of emission of an incident beam (16) directed towards the melted welding material (10) and a detector (18) able to measure the variations in direction, intensity or form of the beam (19) reflected by the surface of the melted material (10).

7. Method according to claim 6, **characterised in that** the incident beam (16) from the source (15) indicated above is a laser beam and the detector (18) indicated above is a photodiode.

8. Method according to claim 4 or 5, **characterised in that** it consists of providing the modification to the surface of the melted material (10) by measuring the quantity of vapour removed from the coating material during welding and comparing it with a predetermined quantity of vapour removed from this material.

9. Method according to claim 8, **characterised in that** it consists of measuring the quantity of vapour removed by a spectroscopic method.

10. Method according to claim 1, **characterised in that** it consists of controlling the energy beam (1) so that the pulses emitted by it are adjusted to make the hole (20) in the pocket (13) of vapour from the coating material present in the melted welding material (10) during each pause pulse (Ip) between two consecutive welding pulses (Is) of the energy beam in order to remove the vapour from the coating material.

11. Method according to daim 2. **characterised in that** it consists of controlling the energy beam (1) so that the pulses emitted by it are adjusted to make the capillary (9) communicate permanently with the tunnel (12) indicated above formed by the pressure of the vapour from the coating material in the melted area of the interface between the two sheets to be welded (2, 3) during each pause pulse (Ip) between two consecutive welding pulses (Is) in order to obtain removal of the vapour from this material during the pause pulse (Ip).

12. Method according to claim 10 or 11, **characterised in that** it consists of reducing the width of each pause pulse (Ip) of the energy beam (1) or introducing an additional pulse (Ip2) during each pause pulse (Ip) to pierce the pocket of vapour indicated above (13) or maintain communication between the capillary (9) and the tunnel (12) indicated above.
